# FASCICULE DE BREVET EUROPEEN

(11) **EP 2 865 426 B1**
(45) Date de publication et mention de la délivrance du brevet: **04.01.2017**
(21) Numéro de dépôt: 14188846.1
(22) Date de dépôt: 14.10.2014
(51) Int. Cl.: A63B 69/00, F16B 21/04, F16B 7/20

(54) **Système de fixation de prise d'escalade, prise d'escalade comprenant un tel système et mur d'escalade comprenant une telle prise**
Befestigungssystem eines Klettergriffs, Klettergriff, der ein solches System beinhaltet, und Kletterwand, die einen solchen Griff umfasst
System for attaching a hold, hold including such a system and climbing wall including such a hold

(30) Priorité: 24.10.2013 FR 1360385
(43) Date de publication de la demande: 29.04.2015
(73) Titulaire: Lab, Frédéric, 25660 Fontain (FR)
(72) Inventeur: Lab, Frédéric, 25660 Fontain (FR)
(74) Mandataire: Cabinet Plasseraud

(56) Documents cités:
- EP-A1- 2 420 304
- WO-A1-2013/160607
- FR-A1- 2 389 027
- US-A- 2 745 162
- US-A- 6 074 327
- US-A1- 2007 240 281

## Description

L'invention se rapporte à un système de fixation de prise d'escalade, à une prise d'escalade comprenant un tel système et à un mur d'escalade comprenant une telle prise.

L'invention s'applique à la réalisation de murs d'escalade artificiels dans lesquels des prises d'escalade comprenant chacune un corps conformé pour constituer un appui pour la main ou le pied d'un utilisateur sont disposés sur une paroi pour former des voies permettant à l'utilisateur de s'exercer à l'escalade.

Un système de fixation de prise d'escalade comprend généralement un insert fixé à la paroi du mur d'escalade et comportant une ouverture, un support destiné à être incorporé dans le corps de la prise d'escalade et une tige de fixation du support à l'insert.

Le document US 6 074 327 décrit un système de fixation conforme au préambule de la revendication 1 et dans lequel la tige de fixation, filetée, s'étend au travers du support pour être vissée dans l'ouverture, taraudée, de l'insert placé dans un trou de la paroi du mur d'escalade. D'autres systèmes de fixation de ce type sont décrits dans les documents JP 09-75475 et FR 2 628 330. Un autre système de fixation connu est décrit dans le document WO 2013/160607 appartenant à l'état de la technique au sens de l'Article 54(3) CBE.

Or l'utilisation du système de fixation connu rend le montage de la prise d'escalade sur la paroi du mur d'escalade long et fastidieux. De plus, la solidarisation de la tige de fixation à l'insert par vissage nécessite l'application complexe d'un couple de serrage optimum assurant un maintien en position de la prise d'escalade sans risquer de provoquer une rupture de l'un des composants du système de fixation ou du corps de la prise d'escalade.

L'invention vise à pallier les problèmes évoqués ci-dessus.

A cet effet, selon un premier aspect, l'invention propose un système de fixation de prise d'escalade comprenant :
- un insert destiné à être fixé à une paroi d'un mur d'escalade, l'insert présentant des faces avant et arrière opposées et s'étendant selon un axe d'insert entre une surface d'extrémité avant sur la face avant et une surface d'extrémité arrière sur la face arrière, l'insert comportant une ouverture s'étendant selon l'axe d'insert entre les surfaces d'extrémités avant et arrière, l'ouverture étant bordée sur la face arrière de l'insert par une surface de retenue,
- un support destiné à être incorporé dans un corps de la prise d'escalade conformé pour constituer un appui pour un utilisateur, le support présentant des surfaces avant et arrière, et
- une tige de fixation adaptée pour fixer le support sur la surface d'extrémité avant de l'insert, de telle manière que la surface arrière du support soit en contact avec la surface d'extrémité avant de l'insert, la tige de fixation s'étendant selon un axe de tige depuis une première extrémité adaptée pour être solidarisée au support, jusqu'à une deuxième extrémité,
dans lequel l'ouverture de l'insert et la deuxième extrémité de la tige de fixation sont conformées pour permettre à la deuxième extrémité de passer au travers de l'ouverture lorsque l'insert et la tige de fixation sont disposés coaxialement et que la tige de fixation est dans une première position angulaire par rapport à l'axe d'insert, et pour empêcher la deuxième extrémité de passer au travers de l'ouverture lorsque l'insert et la tige de fixation sont disposés coaxialement et que la tige de fixation est dans une deuxième position angulaire par rapport à l'axe d'insert,
dans lequel la tige de fixation est adaptée pour que la deuxième extrémité soit en butée sur la surface de retenue de l'insert lorsque le support est fixé sur la surface d'extrémité avant de l'insert par l'intermédiaire de la tige de fixation s'étendant dans l'ouverture dans la deuxième position angulaire,
et dans lequel l'insert comporte un dispositif de fixation à la paroi du mur d'escalade agencé au voisinage de la surface d'extrémité arrière.

Ainsi, le système de fixation selon l'invention permet d'assurer le montage de la prise d'escalade sur la paroi du mur d'escalade en déplaçant la tige de fixation autour de son axe de tige confondu avec l'axe d'insert entre les première et deuxième positions angulaires, séparées l'une de l'autre de moins d'un tour, voire de moins d'un demi-tour. Il en résulte un montage rapide, simple et sécurisé de la prise d'escalade. En outre, l'insert est adapté pour permettre un agencement par rapport à la paroi tel que, combiné au contact entre l'insert et le support, le système de fixation peut réaliser un montage compact et robuste sans créer d'aspérité supplémentaire susceptible de former une prise.

Le dispositif de fixation peut comprendre au moins une patte de fixation s'étendant radialement par rapport à l'axe d'insert et comportant au moins un trou de fixation traversant s'étendant selon un axe parallèle à l'axe d'insert. En particulier, le dispositif de fixation peut comprendre une pluralité de pattes de fixation équiréparties autour de l'axe d'insert.

L'insert peut comprendre un logement formé dans la surface d'extrémité arrière et adapté pour recevoir la deuxième extrémité de la tige de fixation, la surface de retenue étant ménagée dans le logement.

L'insert peut comprendre une plaque s'étendant transversalement par rapport à l'axe d'insert, la plaque portant la surface d'extrémité arrière et le dispositif de fixation.

L'insert peut alors comprendre une jupe cylindrique autour de l'axe d'insert s'étendant depuis une surface avant de la plaque opposée à la surface d'extrémité arrière, la jupe portant la surface d'extrémité avant.

La deuxième extrémité de la tige de fixation peut comporter au moins deux plots saillant radialement par rapport à l'axe de tige et équirépartis autour de l'axe de tige, et l'ouverture peut comporter au moins deux encoches radiales par rapport à l'axe d'insert et adaptées pour permettre aux plots de passer au travers de l'ouverture dans la première position angulaire.

La surface de retenue peut alors comprendre au moins deux sièges agencés chacun entre deux des encoches et adaptés chacun pour recevoir l'un des plots, et au moins deux rampes de guidage s'étendant chacune depuis l'une des encoches en s'écartant par rapport à la surface d'extrémité avant jusqu'à l'un des sièges.

Le support peut comporter un alésage traversant s'étendant selon un axe de support et pourvu d'un épaulement radial par rapport à l'axe de support, et la première extrémité de la tige de fixation peut comporter une tête pourvue d'une surface d'appui s'écartant de l'axe de tige, ladite surface d'appui étant adaptée pour être en appui sur l'épaulement lorsque la tige de fixation est disposée coaxialement dans l'alésage.

Pour assurer la mise en tension de la tige de fixation, le système de fixation peut comprendre en outre un organe élastiquement déformable adapté pour être interposé entre la surface d'appui de la tige de fixation et l'épaulement du support.

Pour réaliser une indexation du positionnement relatif du support et de l'insert et éviter que le support ne pivote par rapport à l'insert après fixation du support sur l'insert, la surface d'extrémité avant de l'insert peut comprendre des crans adaptés pour venir en prise avec des crans complémentaires ménagés sur la surface arrière du support venant en contact avec l'insert lorsque le support est fixé sur la surface d'extrémité avant de l'insert.

L'ouverture de l'insert peut comporter un taraudage adapté pour coopérer avec un filetage d'une tige de fixation filetée. Cette disposition permet d'adapter le système de fixation aux prises d'escalade classiques pourvues de tiges de fixation filetées.

Selon un deuxième aspect, l'invention propose une prise d'escalade comprenant un corps conformé pour constituer un appui pour un utilisateur et un système de fixation tel que défini précédemment, dans laquelle le support est incorporé dans le corps.

Selon un troisième aspect, l'invention propose un mur d'escalade comprenant une paroi et au moins une prise d'escalade telle que définie précédemment, dans lequel l'insert est fixé à la paroi.

D'autres objets et avantages de l'invention apparaîtront à la lecture de la description qui suit d'un mode de réalisation particulier de l'invention donné à titre d'exemple non limitatif, la description étant faite en référence aux dessins annexés dans lesquels :
- la figure 1 est une représentation en perspective éclatée d'une face avant d'un système de fixation de prise d'escalade selon un mode de réalisation de l'invention, le système de fixation comprenant un insert destiné à être fixé à une paroi d'un mur d'escalade, un support destiné à être incorporé à un corps de la prise d'escalade et une tige de fixation du support à l'insert,
- la figure 2 est une représentation en perspective d'une face arrière de l'insert et du support du système de fixation de la figure 1,
- la figure 3 est une représentation de la face arrière du système de fixation de la figure 1, illustrant la tige de fixation dans une première position angulaire par rapport à l'insert dans laquelle une deuxième extrémité pourvue de plots transversaux peut librement passer au travers d'une ouverture ménagée dans l'insert,
- la figure 4 est une représentation analogue à celle de la figure 3, illustrant la tige de fixation dans une deuxième position angulaire par rapport à l'insert dans laquelle la deuxième extrémité est en butée sur une surface de retenue de la face arrière de l'insert,
- la figure 5 est une représentation en coupe selon l'orientation référencée V-V sur la figure 4 d'une prise d'escalade montée sur une paroi d'un mur d'escalade par l'intermédiaire du système de fixation de la figure 1, la tige de fixation étant dans la deuxième position angulaire de la figure 4.

Sur les figures, les mêmes références désignent des éléments identiques ou analogues.

Les figures représentent un système de fixation 1 pour fixer une prise d'escalade 40 à une paroi 51 en vue de réaliser un mur d'escalade 50 artificiel. Pour réaliser un tel mur d'escalade 50, plusieurs prises d'escalade 40 comprenant chacune un corps 41, par exemple en résine, conformé pour constituer un appui pour la main ou le pied d'un utilisateur sont disposés sur la paroi 51 pour former des voies permettant à l'utilisateur de s'exercer à l'escalade, le cas échéant en intérieur.

Le système de fixation 1 comprend un insert 5 destiné à être fixé à la paroi 51 du mur d'escalade 50, un support 20 destiné à être incorporé dans le corps 41 de la prise d'escalade 40 et une tige de fixation 25 du support 20 à l'insert 5.

L'insert 5 s'étend selon un axe d'insert A et présente une face avant 5a destinée, comme il apparaîtra de la suite de la description, à recevoir le support 20 et une face arrière 5b, opposée à la face avant 5a.

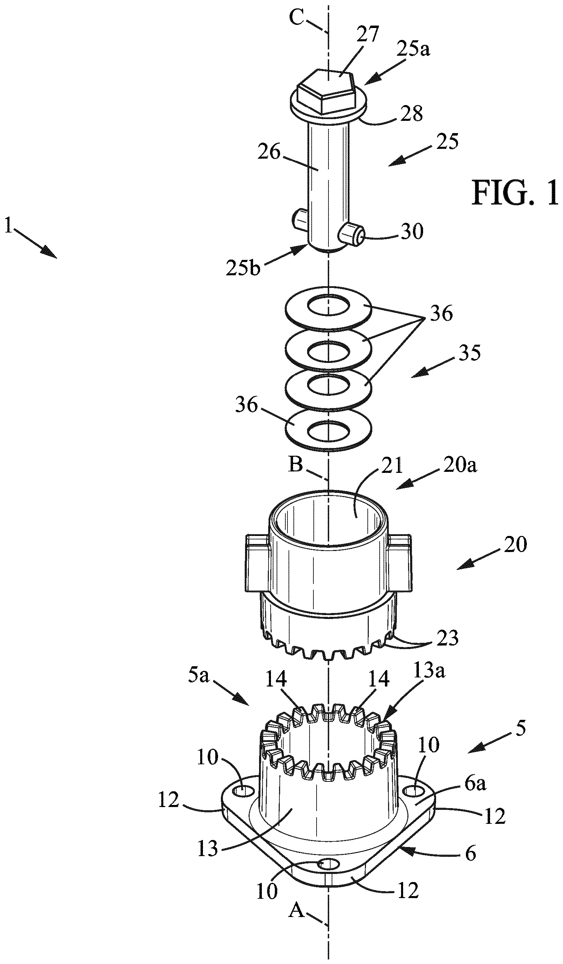

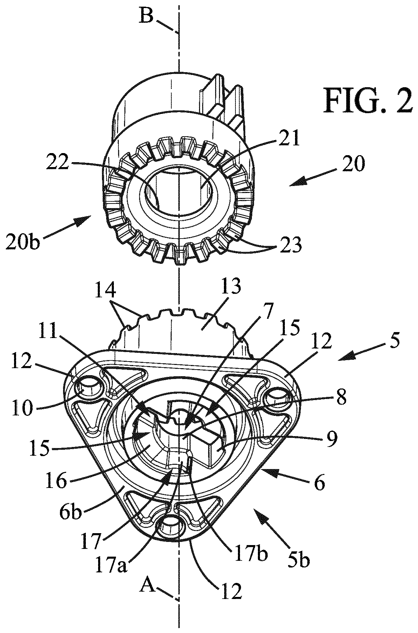

Sur les figures 1 à 3, l'insert 5 comprend une plaque 6 qui s'étend transversalement par rapport à l'axe d'insert A et qui présente des surfaces avant 6a et arrière 6b respectivement sur les faces avant 5a et arrière 5b de l'insert 5. La surface arrière 6b de la plaque 6 constitue, dans le mode de réalisation représenté, une surface d'extrémité arrière de l'insert 5, c'est-à-dire une surface par rapport à laquelle aucune autre surface de l'insert 5 ne fait saillie sur la face arrière 5b de l'insert 5. Dans le mode de réalisation représenté, la plaque 6 présente un contour triangulaire définissant trois angles au niveau de chacun desquels est ménagé un trou de fixation 10 traversant s'étendant selon un axe parallèle à l'axe d'insert A. Les trous de fixation 10 sont adaptés pour permettre le passage d'un organe de fixation, tel qu'une vis, pour fixer l'insert 5 à la paroi 51 du mur d'escalade 50.

Une ouverture 7 s'étendant selon l'axe A perpendiculaire à la plaque 6 est ménagée sensiblement au centre de la plaque 6 entre les surfaces avant 6a et arrière 6b de la plaque 6. L'ouverture 7 comporte un trou 8, cylindrique de section circulaire selon l'axe A de l'ouverture 7, et au moins deux encoches 9 s'étendant radialement par rapport à l'axe A de l'ouverture 7. Selon des dispositions particulières permettant d'améliorer la modularité du système de fixation, le trou cylindrique de l'ouverture 7 de l'insert pourrait comporter un taraudage adapté pour coopérer avec un filetage d'une tige de fixation filetée d'une prise d'escalade classique. Il serait ainsi possible de monter sur les inserts 5 d'un même mur d'escalade des prises d'escalade classiques, à tige de fixation filetée, et des prises d'escalade comprenant le système de fixation à baïonnette selon l'invention.

Sur la face arrière 5b de l'insert 5, la plaque 6 comprend un logement 11 ménagé selon l'axe d'insert A dans la surface d'extrémité arrière 6b et dans lequel débouche l'ouverture 7. Le logement présente une surface de retenue bordant l'ouverture 7. En particulier, la surface de retenue 15 comprend deux rampes de guidage 16 s'étendant chacune depuis l'une des encoches 9 en s'écartant de la surface avant 6a de la plaque 6 jusqu'à un siège 17. Chaque siège 17 comprend un palier 17a s'étendant entre deux bords situés dans un plan globalement perpendiculaire à l'axe d'insert A. Dans le mode de réalisation représenté, le palier 17a présentant une concavité tournée vers la surface d'extrémité arrière de l'insert 5. Chaque siège comprend également une surface de butée 17b radiale par rapport à l'axe d'insert A.

L'insert 5 comprend également une jupe 13, cylindrique autour de l'axe d'insert A, s'étendant depuis la surface avant de la plaque 6, autour de l'ouverture 7, jusqu'à un bord libre 13a définissant, sur la face avant 5a de l'insert 5, une surface d'extrémité avant de l'insert 5, c'est-à-dire une surface par rapport à laquelle aucune autre surface de l'insert 5 ne fait saillie sur la face avant 5a de l'insert 5. Sur la surface d'extrémité avant 13a, l'insert 5 comprend des crans 14.

Dans le mode de réalisation représenté, la jupe 13 présente une section circulaire telle qu'une surface latérale extérieure de la jupe 13 s'étendant autour de l'axe d'insert A soit inscrite dans le contour triangulaire de la plaque 6. La plaque 6 présente alors trois pattes de fixation 12 s'étendant radialement par rapport à l'axe d'insert A, équiréparties autour de l'axe d'insert A et pourvues chacune de l'un des trous de fixation 10.

L'invention n'est pas limitée à un insert 5 comprenant une plaque 6 triangulaire surmontée d'une jupe 13 cylindrique de section circulaire. L'insert 5 pourrait présenter toute autre forme appropriée définissant une ou plusieurs pattes de fixation 12, équiréparties ou non, pourvues d'un ou plusieurs trous de fixation 10 ou de tout autre élément de fixation approprié. La plaque 6 ou les pattes de fixation 12 pourraient également être légèrement décalées par rapport à la surface d'extrémité arrière portée par la jupe 13 ou tout autre élément de l'insert 5, tout en restant au voisinage de cette surface d'extrémité arrière, c'est-à-dire dans une moitié de l'insert 5 située du côté de cette surface d'extrémité arrière.

Le support 20 est réalisé sous la forme d'un manchon cylindrique de section circulaire selon un axe de support B. Le support 20 comporte un alésage 21 traversant s'étendant selon l'axe de support B, entre une surface avant 20a et une surface arrière 20b opposée à la surface avant 20a et destinée à être placée en contact avec la surface d'extrémité avant 13a de l'insert 5. L'alésage 21 est pourvu d'un épaulement 22 annulaire, s'étendant radialement par rapport à l'axe de l'alésage 21. La surface arrière 20b du support 20 comprend des crans 23 agencés pour pouvoir venir en prise avec les crans 14 de la surface d'extrémité avant 13a de l'insert 5 lorsque la surface arrière 20b du support 20 et la surface d'extrémité avant 13a de l'insert 5 sont en contact.

La tige de fixation 25 présente un axe de tige C et comporte un corps 26 cylindrique de section circulaire selon l'axe de tige C, s'étendant depuis une première extrémité 25a pourvue d'une tête 27 jusqu'à une deuxième extrémité 25b. La tête 27 présente une surface d'appui 28 transversale par rapport à l'axe de tige C. La tête 27 est, par ailleurs, conformée pour coopérer avec un outil afin de pouvoir faire tourner la tige de fixation 25, comme il apparaîtra de la suite de la description. La deuxième extrémité 25b de la tige de fixation 25 comporte deux plots 30 écartés l'un de l'autre, saillant depuis le corps 26 radialement par rapport à l'axe de tige C. Les plots 30 sont diamétralement opposés et agencés à la même distance de la première extrémité 25a.

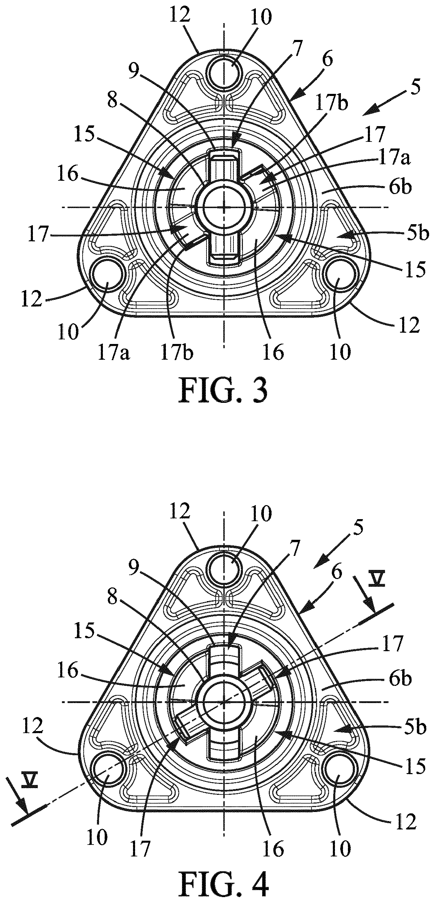

Comme représenté sur les figures 3 et 4, la deuxième extrémité 25b de la tige de fixation 25 et l'ouverture 7 de l'insert 5 sont conformées pour former une fixation du type « à baïonnette ». En particulier, la deuxième extrémité 25b peut passer au travers de l'ouverture 7 lorsque la tige de fixation 25 et l'insert 5 sont positionnés coaxialement l'un par rapport à l'autre et que la tige de fixation 25 est dans une première position angulaire par rapport à l'axe d'insert A, les plots 30 étant en correspondance avec les encoches 9 de l'ouverture 7 dans la première position angulaire. En revanche, la deuxième extrémité 25b ne peut pas passer au travers de l'ouverture 7 lorsque la tige de fixation 25 et l'insert 5 sont positionnés coaxialement l'un par rapport à l'autre et que la tige de fixation 25 est dans une deuxième position angulaire par rapport à l'axe d'insert A, les plots 30 n'étant pas en correspondance avec les encoches 9 de l'ouverture 7 dans la deuxième position angulaire. Dans cette deuxième position angulaire, l'insert 5 peut ainsi retenir la tige de fixation 25 s'étendant dans l'ouverture 7.

Le logement 11 de la plaque 6 de l'insert 5 est adapté pour loger la deuxième extrémité 25b de la tige de fixation et, en particulier, pour recevoir les plots 30, par exemple de telle manière que leur surface extérieure affleure sensiblement la surface d'extrémité arrière 6b de l'insert 5. La surface de retenue 15 de l'insert 5 est, par ailleurs, adaptée pour coopérer avec les plots 30 de manière à assurer le maintien du support 20 sur la surface d'extrémité avant 13a de l'insert 5.

En particulier, comme représenté sur la figure 3, pour réaliser la fixation du support 20 à l'insert 5, la tige de fixation 25 est d'abord placée coaxialement dans l'alésage 21 du support 20 de telle manière que la surface d'appui 28 de la tige de fixation 25 vienne en appui sur l'épaulement 22 du support 20. Un organe élastiquement déformable 35, réalisé dans le mode de réalisation représenté sous la forme d'un empilement de rondelles Belleville 36, est interposé entre la surface d'appui 28 de la tige de fixation 25 et l'épaulement 22 du support 20.

Ensuite, la tige de fixation 25 est positionnée coaxialement à l'ouverture 7 dans la première position angulaire de manière à pouvoir insérer le corps 26 et les plots 30 de la tige de fixation 25 respectivement dans le trou 8 et les encoches 9 de l'ouverture 7 de l'insert 5 dont les dimensions et la géométrie sont adaptées en conséquence.

Comme représenté sur la figure 4, le corps 26 de la tige de fixation 25 et le trou 8 de l'ouverture présentant une géométrie de révolution, la tige de fixation 25 peut être tournée autour de son axe C entre la première position angulaire et la deuxième position angulaire. Avantageusement, les sièges 16 sont positionnés par rapport aux encoches 9 de telle manière que la tige de fixation 25 puisse passer de la première position angulaire à la deuxième position angulaire par un déplacement angulaire inférieur à un tour (360°), voire inférieur à un demi-tour (180°), de préférence voisin d'un quart de tour (90°). Chaque plot 30 peut alors s'engager sur la rampe de guidage 16 correspondante et glisser le long cette rampe de guidage 16 jusqu'à atteindre le siège 17. Au cours de ce mouvement, les rondelles Belleville 36 sont comprimées pour mettre sous tension la tige de fixation 25 et assurer le maintien stable des plots 30 dans les sièges 17 de l'insert 5. Les plots 30 en butée contre la surface de retenue 15 sur la face arrière 5b de l'insert 5 au niveau des sièges 16 assurent la solidarisation de la tête 27 de la tige de fixation 25 au support 20 et ainsi la fixation du support 20 entre la surface d'appui 28 de la tige de fixation 25 et la surface d'extrémité avant 13a de l'insert 5. Dans cette position, la surface arrière 20b du support 20 est en contact avec la surface d'extrémité avant 13a de l'insert 5 assurant une compacité et une robustesse à l'ensemble ainsi formé. Dans le mode de réalisation particulier, les crans 14, 23 de la surface d'extrémité avant 13a de l'insert 5 et de la surface arrière 20b du support 20 sont, par ailleurs, en prise pour permettre une indexation de la position relative du support 20 et de l'insert 5, et ainsi simplifier l'orientation de la prise d'escalade 40, et empêcher la rotation du support 20 par rapport à l'insert 5 lorsque le support 20 repose sur l'insert 5.

L'invention n'est pas limitée au mode de réalisation du système de blocage décrit précédemment et en particulier aux modes de réalisation de la deuxième extrémité 25b de la tige de fixation 25 et de l'ouverture 7 décrits précédemment. En variante, la tige de fixation 25 pourrait comprendre plus de deux plots 30, avantageusement équirépartis autour de l'axe de tige C, l'ouverture 7 de l'insert 5 étant conformée en conséquence.

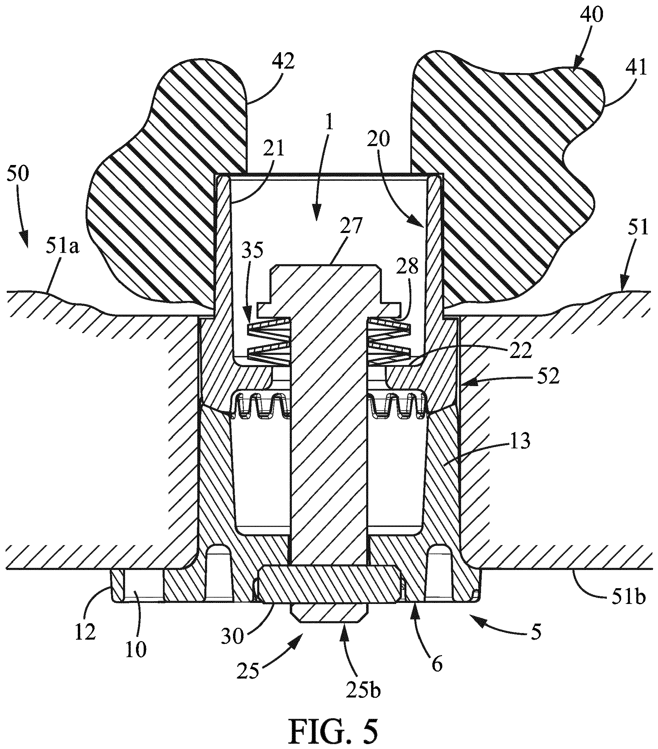

La figure 5 représente une prise d'escalade 40 dont le corps 41 est fixé à la paroi 51 du mur d'escalade 50 par l'intermédiaire du système de fixation 1 décrit précédemment.

En particulier, la paroi 51 présente une surface avant 51 a, par exemple imitant la surface d'une paroi rocheuse naturelle, et une surface arrière 51 b. Elle comporte une ou plusieurs cavités 52 par exemple débouchant sur les surfaces avant 51 a et arrières 51 b. L'insert 5 est placé dans la cavité 52 par l'extrémité de la cavité 52 débouchant sur la surface arrière 51 b. L'insert 5 peut alors être fixé à la paroi 51, par exemple par vissage au travers des trous de fixation 10 de la plaque 6 sur la surface arrière 51 b de la paroi 51.

Le corps 41, par exemple surmoulé sur le support 20, présente un trou traversant 42 en correspondance avec l'alésage 21 du support 20 permettant d'accéder à la tête 27 de la tige de fixation 25 afin de pouvoir la faire passer de la première position angulaire à la deuxième position angulaire et ainsi réaliser la fixation de la prise d'escalade 40 à la paroi 51 du mur d'escalade 50 comme décrit précédemment.

## Revendications

1. Système de fixation (1) de prise d'escalade (40) comprenant :
- un insert (5) destiné à être fixé à une paroi (51) d'un mur d'escalade (50), l'insert (5) présentant des faces avant (5a) et arrière (5b)opposées et s'étendant selon un axe d'insert (A) entre une surface d'extrémité avant (13a) sur la face avant (5a) et une surface d'extrémité arrière (6b) sur la face arrière (5b), l'insert (5) comportant une ouverture (7) s'étendant selon l'axe d'insert (A) entre les surfaces d'extrémités avant (13a) et arrière (6b), l'ouverture (7) étant bordée sur la face arrière (5b) de l'insert (5) par une surface de retenue (15),
- un support (20) destiné à être incorporé dans un corps (41) de la prise d'escalade (40) conformé pour constituer un appui pour un utilisateur, le support (20) présentant des surfaces avant (20a) et arrière (20b), et
- une tige de fixation (25) s'étendant selon un axe de tige (C) depuis une première extrémité (25a) adaptée pour être solidarisée au support (20), jusqu'à une deuxième extrémité (25b),
- l'insert (5) comportant un dispositif de fixation (10,12) à la paroi (51) du mur d'escalade (50) agencé au voisinage de la surface d'extrémité arrière (6b),
ledit système de fixation (1) étant **caractérisé en ce que** la tige de fixation (25) est adaptée pour fixer le support (20) sur la surface d'extrémité avant (13a) de l'insert (5), de telle manière que la surface arrière (20b) du support (20) soit en contact avec la surface d'extrémité avant (13a) de l'insert (5), **en ce que** l'ouverture (7) de l'insert (5) et la deuxième extrémité (25b) de la tige de fixation (25) sont conformées pour permettre à la deuxième extrémité (25b) de passer au travers de l'ouverture (7) lorsque l'insert (5) et la tige de fixation (25) sont disposés coaxialement et que la tige de fixation (25) est dans une première position angulaire par rapport à l'axe d'insert (A), et pour empêcher la deuxième extrémité (25b) de passer au travers de l'ouverture (7) lorsque l'insert (5) et la tige de fixation (25) sont disposés coaxialement et que la tige de fixation (25) est dans une deuxième position angulaire par rapport à l'axe d'insert (A),
et
**en ce que** la tige de fixation (25) est adaptée pour que la deuxième extrémité (25b) soit en butée sur la surface de retenue (15) de l'insert (5) lorsque le support (20) est fixé sur la surface d'extrémité avant (13a) de l'insert (5) par l'intermédiaire de la tige de fixation (25) s'étendant dans l'ouverture (7) dans la deuxième position angulaire.

2. Système de fixation (1) selon la revendication 1, dans lequel le dispositif de fixation comprend au moins une patte de fixation (12) s'étendant radialement par rapport à l'axe d'insert (A) et comportant au moins un trou de fixation (10) traversant s'étendant selon un axe parallèle à l'axe d'insert (A).

3. Système de fixation (1) selon la revendication 2, dans lequel le dispositif de fixation comprend une pluralité de pattes de fixation (12) équiréparties autour de l'axe d'insert (A).

4. Système de fixation (1) selon l'une quelconque des revendications 1 à 3, dans lequel l'insert (5) comprend un logement (11) formé dans la surface d'extrémité arrière (6b) et adapté pour recevoir la deuxième extrémité (25b) de la tige de fixation (25), la surface de retenue (15) étant ménagée dans le logement (11).

5. Système de fixation (1) selon l'une quelconque des revendications 1 à 4, dans lequel l'insert (5) comprend une plaque (6) s'étendant transversalement par rapport à l'axe d'insert (A), la plaque (6) portant la surface d'extrémité arrière (6b) et le dispositif de fixation (10, 12).

6. Système de fixation (1) selon la revendication 5, dans lequel l'insert (5) comprend une jupe (13) cylindrique autour de l'axe d'insert (A) s'étendant depuis une surface avant (6a) de la plaque (6) opposée à la surface d'extrémité arrière (6b), la jupe (13) portant la surface d'extrémité avant (13a).

7. Système de fixation (1) selon l'une quelconque des revendications 1 à 6, dans lequel la deuxième extrémité (25b) de la tige de fixation (25) comporte au moins deux plots (30) saillant radialement par rapport à l'axe de tige (C) et équirépartis autour de l'axe de tige (C), et dans lequel l'ouverture (7) comporte au moins deux encoches (9) radiales par rapport à l'axe d'insert (A) et adaptées pour permettre aux plots (30a) de passer au travers de l'ouverture (7) dans la première position angulaire.

8. Système de fixation (1) selon la revendication 7, dans lequel la surface de retenue (15) comprend au moins deux sièges (17) agencés chacun entre deux des encoches (9) et adaptés chacun pour recevoir l'un des plots (30), et au moins deux rampes de guidage (16) s'étendant chacune depuis l'une des encoches (9) en s'écartant par rapport à la surface d'extrémité avant (13a) jusqu'à l'un des sièges (17).

9. Système de fixation (1) selon l'une quelconque des revendications 1 à 8, dans lequel le support (20) comporte un alésage (21) traversant s'étendant selon un axe de support (B) et pourvu d'un épaulement (22) radial par rapport à l'axe de support (B), et dans lequel la première extrémité (25a) de la tige de fixation (25) comporte une tête (27) pourvue d'une surface d'appui (28) s'écartant de l'axe de tige (C), ladite surface d'appui (28) étant adaptée pour être en appui sur l'épaulement (22) lorsque la tige de fixation (25) est disposée coaxialement dans l'alésage (21).

10. Système de fixation (1) selon la revendication 9, comprenant en outre un organe élastiquement déformable (35) adapté pour être interposé entre la surface d'appui (28) de la tige de fixation (25) et l'épaulement (22) du support (20).

11. Système de fixation (1) selon l'une quelconque des revendications 1 à 10, dans lequel la surface d'extrémité avant (13a) de l'insert (5) comprend des crans (14) adaptés pour venir en prise avec des crans (23) complémentaires ménagés sur la surface arrière (20b) du support (20) venant en contact avec l'insert (5) lorsque le support (20) est fixé sur la surface d'extrémité avant (13a) de l'insert (5).

12. Système de fixation (1) selon l'une quelconque des revendications 1 à 11, dans lequel l'ouverture (7) de l'insert (5) comporte un taraudage adapté pour coopérer avec un filetage d'une tige de fixation filetée.

13. Prise d'escalade (40) comprenant un corps (41) conformé pour constituer un appui pour un utilisateur et un système de fixation (1) selon l'une quelconque des revendications 1 à 12, dans laquelle le support (20) est incorporé dans le corps (41).

14. Mur d'escalade (50) comprenant une paroi (51) et au moins une prise d'escalade (40) selon la revendication 13, dans lequel l'insert (5) est fixé à la paroi (51).

## Patentansprüche

1. Befestigungssystem (1) eines Klettergriffs (40), umfassend:
- ein Einsatzelement (5), welches dazu vorgesehen ist, an eine Wandung (51) einer Kletterwand (50) befestigt zu werden, wobei das Einsatzelement (5) gegenüberliegende vordere (5a) und hintere (5b) Flächen aufweist und sich entlang einer Einsatzachse (A) zwischen einer vorderen Endfläche (13a) an der vorderen Fläche (5a) und einer hinteren Endfläche (6b) an der hinteren Fläche (5b) erstreckt, wobei das Einsatzelement (5) eine Öffnung (7) umfasst, welche sich entlang der Einsatzachse (A) zwischen den vorderen (13a) und hinteren (6b) Endflächen erstreckt, wobei die Öffnung (7) an der hinteren Fläche (5b) des Einsatzelements (5) durch eine Haltefläche (15) umrandet ist,
- ein Trägerelement (20), welches dazu vorgesehen ist, in einem Körper (41) des Klettergriffs (40) aufgenommen zu sein, dazu gebildet, einen Halt für einen Benutzer zu bilden, wobei das Trägerelement (20) vordere (20a) und hintere (20b) Flächen aufweist, und
- eine Befestigungsstange (25), welche sich entlang einer Stangenachse (C) von einem ersten Ende (25a), welches dazu eingerichtet ist, mit dem Trägerelement (20) verbunden zu sein, bis zu einem zweiten Ende (25b) erstreckt,
- wobei das Einsatzelement (5) eine Vorrichtung zum Befestigen (10, 12) an der Wandung (51) der Kletterwand (50) umfasst, welche benachbart zu der hinteren Endfläche (6b) angeordnet ist,
wobei das Befestigungssystem (1) **dadurch gekennzeichnet ist, dass** die Befestigungsstange (25) dazu eingerichtet ist, das Trägerelement (20) an der vorderen Fläche (13a) des Einsatzelements (5) derart zu befestigen, dass die hintere Fläche (20b) des Trägerelements (20) in Kontakt mit der vorderen Endfläche (13a) des Einsatzelements (5) ist, und dass die Öffnung (7) des Einsatzelements (5) und das zweite Ende (25b) der Befestigungsstange (25) dazu ausgebildet sind, es dem zweiten Ende (25b) zu erlauben, durch die Öffnung (7) hindurchzutreten, wenn das Einsatzelement (5) und die Befestigungsstange (25) koaxial angeordnet sind und die Befestigungsstange (25) in einer ersten Winkelposition bezüglich der Einsatzachse (A) ist, und um das zweite Ende (25b) daran zu hindern, durch die Öffnung (7) hindurchzutreten, wenn das Einsatzelement (5) und die Befestigungsstange (25) koaxial angeordnet sind und die Befestigungsstange (25) in einer zweiten Winkelposition bezüglich der Einsatzachse (A) ist,
und dass die Befestigungsstange (25) derart eingerichtet ist, dass das zweite Ende (25b) in Anlage an der Haltefläche (15) des Einsatzelements (5) ist, wenn das Trägerelement (20) an der vorderen Endfläche (13a) des Einsatzelements (5) mittels der sich in der Öffnung (7) in der zweiten Winkelposition erstreckenden Befestigungsstange (25) befestigt ist.

2. Befestigungssystem (1) nach Anspruch 1, wobei die Befestigungsvorrichtung wenigstens eine Befestigungslasche (12) umfasst, welche sich radial bezüglich der Einsatzachse (A) erstreckt und wenigstens ein durchgehendes Befestigungsloch (10) umfasst, welches sich entlang einer Achse parallel zu der Einsatzachse (A) erstreckt.

3. Befestigungssystem (1) nach Anspruch 2, wobei die Befestigungsvorrichtung eine Mehrzahl von Befestigungslaschen (12) welche um die Einsatzachse (A) herum gleich beabstandet sind.

4. Befestigungssystem (1) nach einem der Ansprüche 1 bis 3, wobei das Einsatzelement (5) eine Aufnahme (11) umfasst, welche in der hinteren Endfläche (6b) gebildet und dazu eingerichtet ist, das zweite Ende (25b) der Befestigungsstange (25) aufzunehmen, wobei die Haltefläche (15) in der Aufnahme (11) vorgesehen ist.

5. Befestigungssystem (1) nach einem der Ansprüche 1 bis 4, wobei das Einsatzelement (5) eine Platte (6) umfasst, welche sich transversal bezüglich der Einsatzachse (A) erstreckt, wobei die Platte (6) die hintere Endfläche (6b) und die Befestigungsvorrichtung (10, 12) trägt.

6. Befestigungssystem (1) nach Anspruch 5, wobei das Einsatzelement (5) einen zylindrischen Kragen (13) um die Einsatzachse (A) herum umfasst, welcher sich von einer vorderen Fläche (6a) der Platte (6) gegenüber der hinteren Endfläche (6b) erstreckt, wobei der Kragen (13) die vordere Endfläche (13a) trägt.

7. Befestigungssystem (1) nach einem der Ansprüche 1 bis 6, wobei das zweite Ende (25b) der Befestigungsstange (25) wenigstens zwei Vorsprünge (30) umfasst, welche bezüglich der Stangenachse (C) radial vorstehen und um die Stangenachse (C) herum gleich beabstandet sind, und wobei die Öffnung (7) wenigstens zwei Kerben (9) umfasst, welche bezüglich der Einsatzachse (A) radial und dazu eingerichtet sind, es den Vorsprüngen (30a) zu erlauben, in der ersten Winkelposition durch die Öffnung (7) hindurchzutreten.

8. Befestigungssystem (1) nach Anspruch 7, wobei die Haltefläche (15) wenigstens zwei Sitze (17) umfasst, wobei Kerben (9) zwischen jeweils zwei davon angeordnet sind, und welche jeweils dazu eingerichtet sind, einen der Vorsprünge (30) aufzunehmen, sowie wenigstens zwei Führungsflächen (16), welche sich jeweils von einer der Kerben (9) erstrecken, indem sie bezüglich der vorderen Endfläche (13a) bis zu einem der Sitze (17) weg verlaufen.

9. Befestigungssystem (1) nach einem der Ansprüche 1 bis 8, wobei das Trägerelement (20) eine durchgehende Bohrung (21) umfasst, welche sich entlang einer Trägerachse (B) erstreckt und mit einer bezüglich der Trägerachse (B) radialen Schulter (22) versehen ist, und wobei das erste Ende (25a) der Befestigungsstange (25) einen Kopf (27) umfasst, welcher mit einer Anlagefläche (28) versehen ist, welche von der Stangenachse (C) weg verläuft, wobei die Anlagefläche (28) dazu eingerichtet ist, an der Schulter (22) in Anlage zu sein, wenn die Befestigungsstange (25) koaxial in der Bohrung (21) angeordnet ist.

10. Befestigungssystem (1) nach Anspruch 9, ferner umfassend ein elastisch verformbares Element (35), welches dazu eingerichtet ist, zwischen die Anlagefläche (28) der Befestigungsstange (25) und die Schulter (22) des Trägerelements (20) eingefügt zu sein.

11. Befestigungssystem (1) nach einem der Ansprüche 1 bis 10, wobei die vordere Endfläche (13a) des Einsatzelements (5) Einschnitte (14) umfasst, welche dazu eingerichtet sind, mit komplementären Einschnitten (23) zusammenzukommen, welche an der hinteren Fläche (20b) des Trägerelements (20) vorgesehen sind, welche mit dem Einsatzelement (5) in Kontakt kommt, wenn das Trägerelement (20) an der vorderen Endfläche (13a) des Einsatzelements (5) befestigt ist.

12. Befestigungssystem (1) nach einem der Ansprüche 1 bis 11, wobei die Öffnung (7) des Einsatzelements (5) eine Gewindebohrung umfasst, welche dazu eingerichtet ist, mit einem Gewinde einer mit einem Gewinde ausgebildeten Befestigungsstange zusammenzuwirken.

13. Klettergriff (40), umfassend einen Körper (41), welcher dazu ausgebildet ist, einen Halt für einen Benutzer zu bilden, und ein Befestigungssystem (1) nach einem der Ansprüche 1 bis 12, wobei das Trägerelement (20) in dem Körper (41) aufgenommen ist.

14. Kletterwand (50), umfassend eine Wandung (51) und wenigstens einen Klettergriff (40) nach Anspruch 13, wobei das Einsatzelement (5) an der Wandung (51) befestigt ist.

## Claims

1. Fixing system (1) for a climbing hold (40), comprising:
- an insert (5) designed to be secured to a face (51) of a climbing wall (50), the insert (5) having opposing front (5a) and rear (5b) faces and extending along an insert axis (A) between a front end surface (13a) on the front face (5a) and a rear end surface on the rear face (5b), the insert (5) having an opening (7) extending along the insert axis (A) between the front (13a) and rear (6b) end surfaces, the opening (7) being bounded at the rear face (5b) of the insert (5) by a retaining surface (15),
- a support (20) designed to be incorporated in a body (41) of the climbing hold (40) shaped so as to form a support for a user, the support (20) having front (20a) and rear (20b) surfaces, and
- a fixing rod (25) extending along a rod axis (C) from a first end (25a) designed to be connected to the support (20) as far as a second end (25b), - the insert (5) having a device (10, 12) for affixing to the face (51) of the climbing wall (50) disposed in the vicinity of the rear end surface (6b),
said fixing system (1) being **characterised in that** the fixing rod (25) is designed to secure the support (20) on the front end surface (13a) of the insert (5) in such a way that the rear surface (20b) of the support (20) is in contact with the front end surface (13a) of the insert (5), the opening (7) of the insert (5) and the second end (25b) of the fixing rod (25) are shaped so as to enable the second end (25b) to pass through the opening (7) when the insert (5) and the fixing rod (25) are disposed coaxially and the fixing rod (25) is in a first angular position relative to the insert axis (A) and to prevent the second end (25b) from passing through the opening (7) when the insert (5) and the fixing rod (25) are disposed coaxially and the fixing rod (25) is disposed in a second angular position relative to the insert axis (A),
and the fixing rod (25) is designed so that the second end (25b) sits in abutment with the retaining surface (15) of the insert (5) when the support (20) is secured on the front end surface (13a) of the insert (5) via the fixing rod (7) extending through the opening (7) in the second angular position.

2. Fixing system (1) as claimed in claim 1, wherein the fixing device comprises at least one mounting tab (12) extending radially relative to the insert axis (A) and having at least one mounting through-hole (10) extending along an axis parallel with the insert axis (A).

3. Fixing system (1) as claimed in claim 2, wherein the fixing device comprises a plurality of mounting tabs (12) distributed equidistantly around the insert axis (A).

4. Fixing system (1) as claimed in any one of claims 1 to 3, wherein the insert (5) comprises a mount (11) formed in the rear end surface (6b) and designed to receive the second end (25b) of the fixing rod (25), the retaining surface (15) being disposed in the mount (11).

5. Fixing system (1) as claimed in any one of claims 1 to 4, wherein the insert (5) comprises a plate (6) extending transversely to the insert axis (A), the plate (6) incorporating the rear end surface (6b) and the fixing device (10, 12).

6. Fixing system (1) as claimed in claim 5, wherein the insert (5) comprises a cylindrical skirt (13) around the insert axis (A) extending out from a front surface (6a) of the plate (6) opposite the rear end surface (6b), the skirt (13) incorporating the front end surface (13a).

7. Fixing system (1) as claimed in any one of claims 1 to 6, wherein the second end (25b) of the fixing rod (25) comprises at least two lugs (30) projecting radially relative to the rod axis (C) and distributed equidistantly around the rod axis (C), and wherein the opening (7) comprises at least two notches (9) extending radially with respect to the insert axis (A) and designed to enable the lugs (30a) to pass through the opening (7) in the first angular position.

8. Fixing system (1) as claimed in claim 7, wherein the retaining surface (15) comprises at least two seats (17) each disposed between two of the notches (9) and designed to receive one of the lugs (30), and at least two guide ramps (16) each extending from one of the notches (6) away from the front end surface (13a) as far as one of the seats (7).

9. Fixing system (1) as claimed in any one of claims 1 to 8, wherein the support (20) comprises a through-bore (21) extending along a support axis (B) and provided with a shoulder (22) extending radially with respect to the support axis (B), and wherein the first end (25a) of the fixing rod (25) comprises a head (27) provided with a support surface (28) extending out from the rod axis (C), said support surface (28) being designed to be supported on the shoulder (22) when the fixing rod (25) is disposed coaxially in the bore (21).

10. Fixing system (1) as claimed in claim 9, further comprising an elastically deformable element (35) designed to be positioned between the support surface (28) of the fixing rod (25) and the shoulder (22) of the support (20).

11. Fixing system (1) as claimed in any one of claims 1 to 10, wherein the front end surface (13a) of the insert (5) comprises notches (14) designed to move into engagement with complementary notches (23) provided on the rear surface (20b) of the support (20) as it moves into contact with the insert (5) when the support (20) is secured on the front end surface (13a) of the insert (5).

12. Fixing system (1) as claimed in any one of claims 1 to 11, wherein the opening (7) of the insert (5) comprises threading designed to co-operate with a thread of a threaded fixing rod.

13. Climbing hold (40) comprising a body (41) shaped to form a support for a user and a fixing system (1) as claimed in any one of claims 1 to 12, wherein the support (20) is incorporated in the body (41).

14. Climbing wall (50) comprising a face (51) and at least one climbing hold (40) as claimed in claim 13, wherein the insert (5) is secured to the wall (51).
